Europäisches Patentamt

(19) European Patent Office

Office européen des brevets

(11) Publication number: **0 080 003**
**B1**

(12) **EUROPEAN PATENT SPECIFICATION**

(45) Date of publication of patent specification: **03.09.86**

(21) Application number: **81850220.5**

(22) Date of filing: **19.11.81**

(51) Int. Cl.⁴: **A 01 G 27/00**

(54) Method of watering potted plants.

(43) Date of publication of application:
**01.06.83 Bulletin 83/22**

(45) Publication of the grant of the patent:
**03.09.86 Bulletin 86/36**

(84) Designated Contracting States:
**AT CH DE FR GB LI NL**

(56) References cited:
**FR-A-2 394 242**
**FR-A-2 397 146**

(73) Proprietor: **Christensson, Hans Georg Christian**
**Mobäcksgatan 25**
**S-216 24 Malmö (SE)**

(72) Inventor: **Christensson, Hans Georg Christian**
**Mobäcksgatan 25**
**S-216 24 Malmö (SE)**

(74) Representative: **Ström, Tore et al**
**Ström & Gulliksson AB Studentgatan 1**
**P.O. Box 4188**
**S-203 13 Malmö (SE)**

Courier Press, Leamington Spa, England.

## Description

The present invention relates to a method of watering potted plants placed on a support which comprises parallel watering channels defined between elongated projecting ridges, and is slightly inclined in the longitudinal direction of the watering channels, the water being supplied to the channels from the upper end of the support to be sucked up through the bottom of the pots by the plants potted therein.

Tables for watering potted plants are disclosed in FR—A—2 394 242 and FR—A—2 397 146, comprising projecting ridges supporting the pots, and watering channels therebetween.

FR—A—2 397 146 also states that the rate of flow of water and drainage of the water can be controlled by regulating the inclination of the table.

Watering of potted plants can take place in several different manners in the growing of potted plants. The water can be spread out at the end or the side of a planar or inclining table. It can also be spread out at the centre of the table or at several locations along the entire width of the table.

An absorbing or distributing material such as mats or sand or completely neutral materials which cannot absorb or distribute water but only retard the water flow to some extent, can be used as the support in the tables for potted plants.

A problem encountered in connection with present methods and materials is that it cannot be taken for sure that the water is distributed uniformly if the tables are slightly uneven or if they are inclined to a varying extent. A table for potted plants having a length of 25 m and a width of 2 m can have e.g. a longitudinal inclination of 0.5 % while being horizontal in the transverse direction thereof. Unfortunately, it is possible to maintain the table horizontal in the transverse direction only approximately and only for a short time due to the fact that the table will sag under the weight of the potted plants which may be non-uniformly distributed over the table surface. Therefore, when watering is initiated from the remote end of the table, the water will flow diagonally and already after a few meters will cover a limited portion only of the width of the table. This problem prevents a complete automation of the watering of the potted plants and moreover often necessitates that 2 to 5 watering pipes are installed in the longitudinal direction of the table, which are uniformly distributed over the entire width (about 2 m) of the table surface, which is expensive. Furthermore, the watering pipes often interfere with the pots which could be arranged very close to each other if this was not prevented by the watering pipes.

Also as far as older tables are concerned it is desired to automate the watering which can be effected in the simplest way by inclining the tables in the transverse direction thereof. Due to unevenness of the table surface it is then necessary to use sand or mats which absorb and distribute the water. In many cases it is an obvious disadvantage to use in the wintertime or, for some plants, all the year around supports retaining water therein, because the growth in that case cannot be controlled. It is desired to use a support which does not retain water.

The watering usually is the most time-consuming operation in growing potted plants. Accordingly, there is a great need to automate the watering completely and to make the watering cheap as well as simple, such that the watering system is not interfering with the handling and cultivation of the plants, and can be made of neutral materials which do not retain water and which guide the distribution of the water in a predetermined direction, all plants on a table for potted plants thus being supplied with water.

The purpose of the present invention is to eliminate the drawbacks of existing methods and materials and to make an automation of the watering possible also under less favourable conditions.

This object is achieved by a method of watering potted plants, the features thereof appearing from the characterizing part of the following claim.

A covering material e.g. of plastics, rubber or another resilient material is formed with ridges which can be e.g. 1 to 10 mm high and can be mutually spaced e.g. 10 to 20 mm. The covering material is placed on top of the table for the potted plants, which can be slightly inclined in the longitudinal or transverse direction thereof.

The water is supplied at the end of the covering material, located at the highest level and then follows the grooves between the ridges and drains away at the end or at the side of the table. Due to the height and closeness of the ridges the water will be guided in a specific groove from one end to the other of the table independently of the degree of lateral inclination of the table. The potted plants are placed on the ridges of the covering material, and when the water in the grooves below the pot contacts the bottom thereof, the soil in the pot will be able to absorb water, the superfluous water at the same time passing by. When the water supply to the table or the covering material is interrupted, the water which has not been consumed by the plants will drain away and there will be obtained in a short time a dry table, which contributes to the control of the growth. More or less water can be supplied to a plant and the growth thereof can be controlled thereby.

Even if the support of the table partly is inclined laterally in relation to the grooves or ridges the water will flow in the longitudinal direction of the table if the table has a predetermined inclination in the longitudinal direction thereof. The water can be supplied at the upper end of the table either over the entire width of the table or over a limited portion thereof. If it is desired to water e.g. only the margins of the table, it is possible to do so.

The principle accordingly differs from the prior art in this field. The watering method provides a technical effect which makes automatic watering reliable.

If the potted plants are watered by means of a system guided by grooves, all plants accordingly can be supplied with water independently of to which extent e.g. tables with longitudinal inclination are inclined laterally and independently of unevenness of the tables. It would be possible to automate completely the watering system and, if it is desirable, to reuse the water which has passed the table and which has not been absorbed by the plants.

The invention will be described in more detail below by means of embodiments with reference to the accompanying drawings.

FIG. 1 discloses part of the device according to the invention and illustrates a cross-sectional view of a covering material,

FIG. 2 discloses the covering material placed on a table for potted plants,

FIG. 3 discloses the watering method according to the invention and illustrates a potted plant placed on the covering material, and flowing water in channels in the covering material, and

FIG. 4 discloses a watering pipe at one end of the covering material.

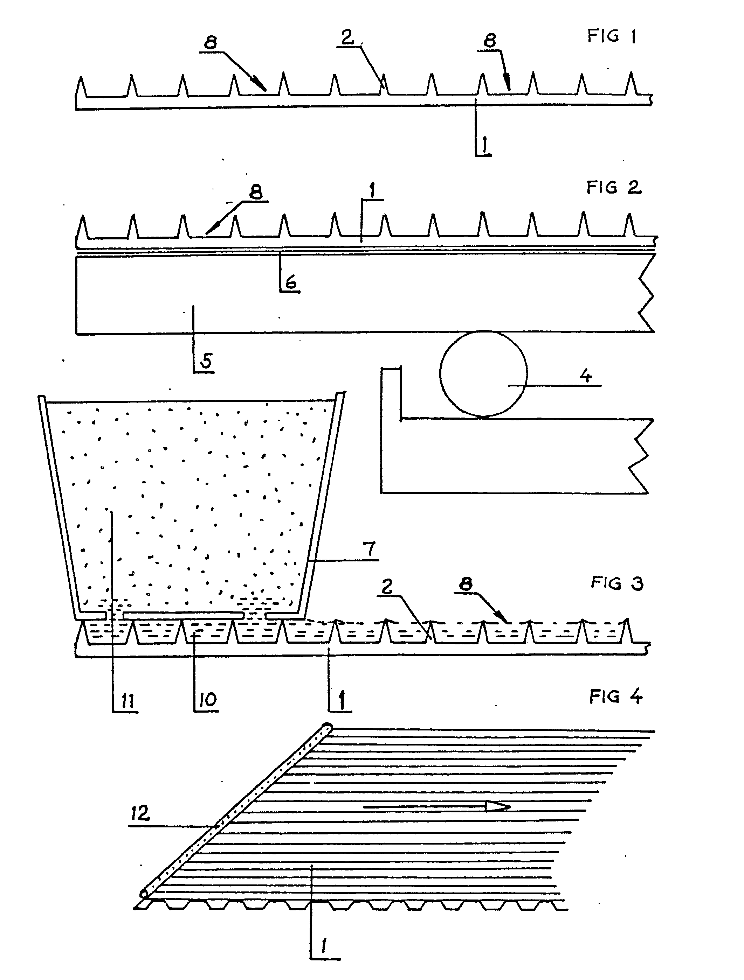

FIG. 1 discloses a covering material or a mat comprising a bottom sheet 1 and ridges 2 projecting therefrom. It is not necessary that the thickness of the bottom sheet is greater than that providing a satisfactory support for the ridges. The distance between the ridges 2 can be in the range from one millimeter or two to several centimeters depending on the lateral inclination of the table and the size of the pots. The ridges 2 can have a sharp or flat top and they can be hard or soft.

In FIG. 2 a table for potted plants is shown with a mat placed thereon. The table is supported by supporting pipes 4 and comprises a corrugated metal sheet 5 which is arranged as a support for a planar metal sheet 6 which in turn forms the planar support for the bottom sheet 1.

Pots are placed on the ridges 2 of the bottom sheet 1, water 10 between the ridges simultaneously contacting the soil 11 in the pot, which will be saturated with water (FIG. 3).

In FIG. 4 there is shown a perforated watering tube 12 which extends in the transverse direction of the table along one end thereof. When water is supplied such water flows over the mat 1 which by means of the ridges prevents the water from flowing diagonally over the table if the table is inclined laterally. All potted plants on the table will be supplied with water due to the water being guided in this way.

The bottom sheet 1 and the ridges 2 preferably are made integrally of a suitable material such as metal sheet, plastics or rubber.

**Claim**

A method of watering potted plants placed on a support (1, 2, 5, 6) which comprises parallel watering channels (8) defined between elongated projecting ridges (2), and is slightly inclined in the longitudinal direction of the watering channels, water (10) being supplied to the channels from the upper end of the support to be absorbed through the bottom of the pots (7) by the plants potted therein, characterized in that each pot (7) is placed in linear contact with a number of ridges (2) and is supported by the ridges to span the watering channels (8) defined therebetween, the water being flown through the channels in contact with the lower side of the bottom of the pot.

**Patentanspruch**

Verfahren zur Bewässerung von auf einem Träger (1, 2, 5, 6) ruhenden Topfpflanzen, wobei der Träger (1, 2, 5, 6) parallele Bewässerungskanäle (8) aufweist, die von länglichen vorstehenden Stegen (82) begrenzt sind, und leicht in Längsrichtung der Bewässerungskanäle geneigt ist und wobei Wasser (10) den Kanälen vom oberen Ende des Trägers zugeführt wird, um von den eingetopften Pflanzen durch den Boden der Töpfe (7) absorbiert zu werden, dadurch gekennzeichnet, dass jeder Topf (7) in linearem Kontakt mit einer Anzahl Stege (2) steht und durch die Stege getragen ist, um die dazwischen angeordneten Bewässerungskanäle (8) zu überspannen, wobei das Wasser durch die Kanäle in Kontakt mit der Unterseite des Bodens des Topfes hindurchgeführt wird.

**Revendication**

Procédé d'arrosage de plantes en pots placé sur un support (1, 2, 5, 6), comprenant des canaux (8) d'arrosage parallèles définis par des arêtes (2) allongées en relief, et qui est légèrement incliné selon la direction longitudinale des canaux d'arrosage, de l'eau (10) alimentant les canaux depuis l'extrémité supérieure du support pour être absorbée à travers le fond des pots (7) par les plantes en pots qui y sont placées, caractérisé en ce que chaque pot (7) est placé en contact linéaire avec une pluralité d'arêtes (2) et est supporté par les arêtes de façon à s'étendre au-dessus des canaux d'arrosage (8) définis par les arêtes, l'eau s'écoulant à travers les canaux en contact avec la partie inférieure du fond du pot.

0 080 003

FIG 1

FIG 2

FIG 3

FIG 4

1